# EUROPEAN PATENT APPLICATION

(11) **EP 4 579 863 A1**
(43) Date of publication of application: **02.07.2025**
(21) Application number: 23857055.0
(22) Date of filing: 21.07.2023
(51) Int. Cl.: H01M 10/0587, H01M 4/131, H01M 4/133, H01M 4/134, H01M 4/36, H01M 4/38, H01M 4/587, H01M 4/66, H01M 10/052

(54) **NONAQUEOUS ELECTROLYTE SECONDARY BATTERY**

(30) Priority: 26.08.2022 JP 2022135425
(71) Applicant: Panasonic Intellectual Property Management Co., Ltd., Kadoma-shi, Osaka 571-0057 (JP)
(72) Inventor: TSUKASAKI, Takashi, Kadoma-shi, Osaka 571-0057 (JP); IWAMOTO, Takuya, Kadoma-shi, Osaka 571-0057 (JP); GOTO, Natsumi, Kadoma-shi, Osaka 571-0057 (JP)
(74) Representative: Eisenführ Speiser
(86) International application number: PCT/JP2023/026754
(87) International publication number: WO 2024/042939

(57) **Abstract**

One embodiment of the present invention provides a nonaqueous electrolyte secondary battery (10) which comprises a positive electrode (11) that contains a lithium-containing transition metal composite oxide and a sulfonic acid compound that is present on the surfaces of particles of the composite oxide. The sulfonic acid compound is represented by formula (I). With respect to this nonaqueous electrolyte secondary battery, a negative electrode (12) comprises a negative electrode core body and a negative electrode mixture layer that is formed on the surface of the negative electrode core body; and the 1% proof stress of the negative electrode core body is 300 MPa or less. 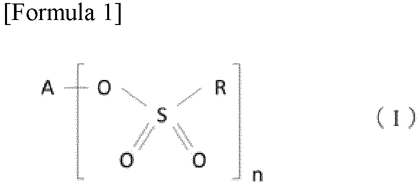 (In the formula, A represents a group 1 element or a group 2 element; R represents a hydrocarbon group; and n is 1 or 2.)

## Description

### TECHNICAL FIELD

The present disclosure relates to a non-aqueous electrolyte secondary battery.

### BACKGROUND ART

Patent Literature 1 proposes an active material in which a surface layer including a lithium sulfonate compound is formed on particle surfaces of lithium titanate mainly containing Li₄Ti₅O₁₂. Patent Literature 1 describes that use of this active material for a negative electrode active material may inhibit change in resistance before and after storage of a charged battery.

### CITATION LIST

### PATENT LITERATURE

PATENT LITERATURE 1: Japanese Unexamined Patent Application Publication No. 2018-6164

### SUMMARY

It is an important challenge in the non-aqueous electrolyte secondary battery to achieve increase in capacity. The conventional art including Patent Literature 1 cannot sufficiently deal with the above challenge, and still has large room for improvement.

A non-aqueous electrolyte secondary battery according to the present disclosure is a non-aqueous electrolyte secondary battery comprising: a positive electrode; a negative electrode; and a non-aqueous electrolyte, wherein the positive electrode includes a lithium-containing transition metal composite oxide and a sulfonate compound present on particle surfaces of the composite oxide, the sulfonate compound is a compound represented by a formula (I), the negative electrode has a negative electrode core and a negative electrode mixture layer formed on a surface of the negative electrode core, and a 1%-proof stress of the negative electrode core is less than or equal to 300 MPa.

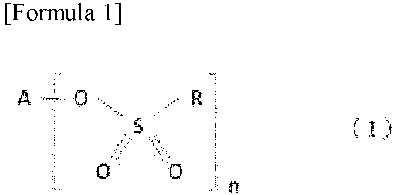

In the formula, A is a group I element or a group II element, R is a hydrocarbon group, and n is 1 or 2.

The non-aqueous electrolyte secondary battery according to the present disclosure may achieve increase in capacity.

### BRIEF DESCRIPTION OF DRAWING

FIG. 1 is a sectional view of a non-aqueous electrolyte secondary battery of an example of an embodiment.
FIG. 2 is a view indicating a relationship between strain and stress in a tensile test on a negative electrode core.

### DESCRIPTION OF EMBODIMENTS

The present inventors have made investigation to consequently find that the non-aqueous electrolyte secondary battery having high capacity may be achieved by presence of the sulfonate compound represented by the formula (I) on particle surfaces of a lithium-containing transition metal composite oxide used as a positive electrode active material. This is presumably because the sulfonate compound can function to reduce reaction resistance of the positive electrode and increase charge-discharge depth. However, use of the lithium-containing transition metal composite oxide having such a sulfonate compound present thereon for the positive electrode active material causes a new problem of considerable decrease in a percentage of elongation at break of the positive electrode. In a wound non-aqueous electrolyte secondary battery comprising an electrode assembly in which the positive electrode and the negative electrode are wound via a separator, the decrease in the percentage of elongation at break of the positive electrode enlarges a size of a winding core in winding. When the battery size is constant, the enlarged size of the winding core shortens the electrode assembly, and consequently decreases charge-discharge capacity of the wound non-aqueous electrolyte secondary battery.

As noted above, although the sulfonate compound specifically functions to reduce the reaction resistance of the positive electrode and increase the charge-discharge depth of the positive electrode when applied on the particle surfaces of the lithium-containing transition metal composite oxide, only simply applying the sulfonate compound for the positive electrode cannot achieve the wound non-aqueous electrolyte secondary battery having high capacity. Specifically, decrease in the charge-discharge capacity affected by the increase in size of the winding core with decrease in the percentage of elongation at break of the positive electrode becomes more remarkable than the effect of increase in capacity by using the positive electrode active material in which the sulfonate compound is present for the positive electrode, leading to decrease in the charge-discharge capacity as an entirety of the wound non-aqueous electrolyte secondary battery.

Accordingly, the present inventors have made intensive investigation to solve the above problem, and consequently found that, when the positive electrode active material in which the sulfonate compound is present is used, a 1%-proof stress of a negative electrode core specifically affects the size of the winding core in winding. Specifically, setting the 1%-proof stress of the negative electrode core to be less than or equal to 300 MPa may improve winding properties of the electrode plate in producing the electrode assembly to inhibit increase in the winding core diameter with decrease in the percentage of elongation at break of the positive electrode. In other words, if the 1%-proof stress of the negative electrode core is greater than 300 MPa, the winding properties of the electrode assembly considerably deteriorate to increase the winding core diameter.

By using the lithium-containing transition metal composite oxide having the sulfonate compound adhering to the particle surfaces as the positive electrode active material and by using the negative electrode core having a 1%-proof stress of less than or equal to 300 MPa, the charge-discharge capacity of the wound non-aqueous electrolyte secondary battery has been successfully increased. According to the wound non-aqueous electrolyte secondary battery of the present disclosure, use of the negative electrode core having a 1%-proof stress of less than or equal to 300 MPa may improve the winding properties of the electrode plate in producing the electrode assembly to inhibit increase in size of the winding core with decrease in the percentage of elongation at break of the positive electrode. As a result, the electrode assembly may be lengthened to more exhibit the effect of increasing the capacity by the presence of the sulfonate compound in the positive electrode.

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below.

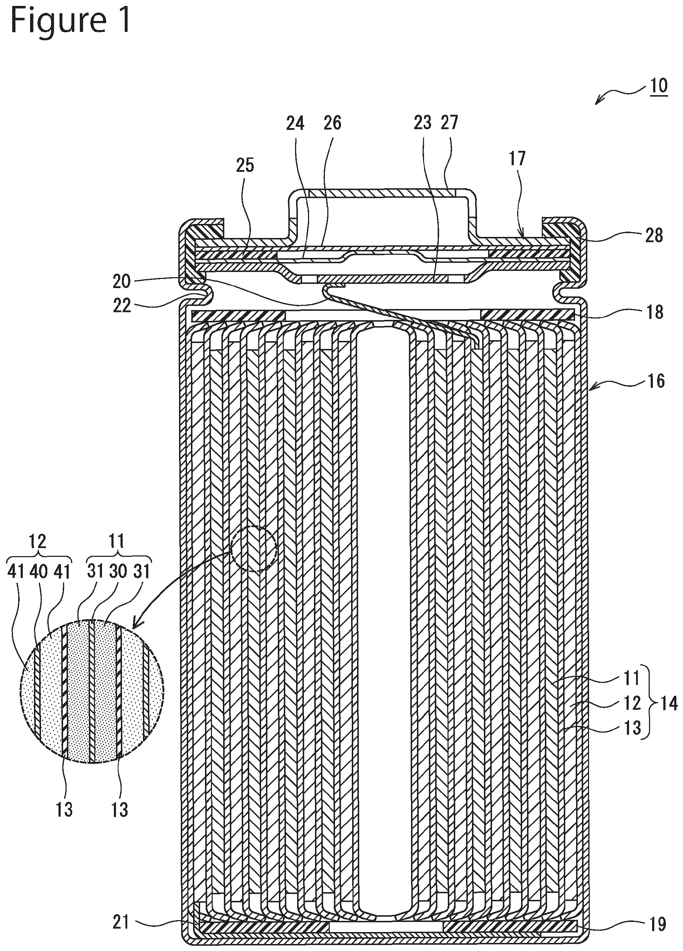

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (electrolyte liquid) or may be a solid electrolyte.

The liquid electrolyte (electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, will be described in detail.

### [Positive Electrode]

The positive electrode 11 has a positive electrode core 30 and a positive electrode mixture layer 31 provided on a surface of the positive electrode core 30. For the positive electrode core 30, a foil of a metal stable within a potential range of the positive electrode 11, such as aluminum, a film in which such a metal is disposed on a surface thereof, and the like may be used. The positive electrode mixture layer 31 includes a positive electrode active material, a conductive agent, and a binder, and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the conductive agent, and the binder on the surface of the positive electrode core 30, and drying and subsequently compressing the coating film to form the positive electrode mixture layer 31 on both the surfaces of the positive electrode core 30.

Examples of the conductive agent included in the positive electrode mixture layer 31 include carbon materials such as carbon black such as acetylene black and Ketjenblack, graphite, carbon nanotube (CNT), carbon nanofiber, and graphene. Examples of the binder included in the positive electrode mixture layer 31 include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide, and the like. Content rates of the conductive agent and the binder are, for example, each greater than or equal to 0.1 mass% and less than or equal to 5.0 mass% relative to a mass of the positive electrode mixture layer 31.

The positive electrode 11 includes a lithium-containing transition metal composite oxide and a sulfonate compound present on particle surfaces of the composite oxide. The lithium-containing transition metal composite oxide having the sulfonate compound adhering to the particle surfaces functions as the positive electrode active material. The sulfonate compound is a compound represented by the formula (I).

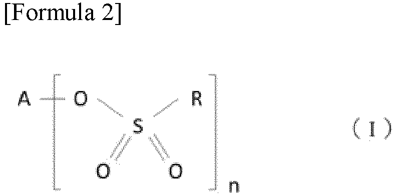

In the formula, A is a group I element or a group II element, R is a hydrocarbon group, and n is 1 or 2.

The sulfonate compound represented by the formula (I) (hereinafter, which may be simply referred to as "sulfonate compound") reduces reaction resistance on the positive electrode 11 to improve output characteristics of the battery. In addition, the reduction in resistance can increase the charge-discharge depth to achieve increase in the capacity. Although the sulfonate compound exhibits the effect at an extremely small amount, the sulfonate compound is preferably present on the particle surfaces of the composite oxide at an amount of greater than or equal to 0.01 mass% relative to the mass of the lithium-containing transition metal composite oxide. The content rate of the sulfonate compound is more preferably greater than or equal to 0.05 mass%, and particularly preferably greater than or equal to 0.10 mass% relative to the mass of the lithium-containing transition metal composite oxide.

An upper limit of the content rate of the sulfonate compound is not particularly limited, and preferably 2.0 mass%, more preferably 1.5 mass%, and particularly preferably 1.0 mass% relative to the mass of the lithium-containing transition metal composite oxide from the viewpoint of improving the winding properties of the electrode plate in producing the electrode assembly. The sulfonate compound is present at an amount of, for example, greater than or equal to 0.05 mass% and less than or equal to 1.50 mass% or greater than or equal to 0.1 mass% and less than or equal to 1.0 mass% relative to the mass of the lithium-containing transition metal composite oxide.

The positive electrode active material mainly contains the composite particles that are the lithium-containing transition metal composite oxide having the sulfonate compound adhering to the particle surfaces, and may be constituted with substantially only the composite particles. Note that the positive electrode active material may include a composite oxide other than the composite particles, or another compound within a range not impairing the object of the present disclosure.

The lithium-containing transition metal oxide preferably has a layered rock-salt structure. Examples of the layered rock-salt structure of the lithium-containing transition metal oxide include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. The layered rock-salt structure of the lithium-containing transition metal oxide includes a transition metal layer, a Li layer, and an oxygen layer.

The lithium-containing transition metal oxide is a composite oxide containing metal elements such as Co, Mn, Ni, and Al in addition to Li. The metal element constituting the lithium-containing transition metal oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among these, at least one selected from the group consisting of Co, Ni, and Mn is preferably contained. An example of the preferable composite oxide includes a composite oxide containing Ni, Co, and Mn, or a composite oxide containing Ni, Co, and Al.

The lithium-containing transition metal oxide contains Ni at preferably greater than or equal to 70 mol%, and more preferably greater than or equal to 80 mol% relative to a total number of moles of metal elements excluding Li from the viewpoints of increase in the capacity, and the like. The effect by adding the sulfonate compound is more remarkable when the lithium-containing transition metal oxide having a higher Ni content rate is used. The content rate of Ni may be greater than or equal to 85 mol%, or may be greater than or equal to 90 mol% relative to the total number of moles of the metal elements excluding Li. An upper limit of the Ni content rate is, for example, 95 mol%.

An example of the preferable lithium-containing transition metal oxide is the composite oxide containing Ni, Co, and Al, as noted above. Relative to the total number of moles of the metal elements excluding Li, a content rate of Al is greater than or equal to 4 mol% and less than or equal to 15 mol%, and a content rate of Co is less than or equal to 1.5 mol%. The content rate of Al within the above range stabilizes the crystal structure to contribute to improvement of the cycle characteristics. Co may not be added substantially, but adding a small amount of Co improves the battery performance.

The lithium-containing transition metal oxide is, for example, a composite oxide represented by the general formula LiₐNiₓAl_{y}Co_{z}M1_{w}O_{2-b}, wherein 0.8 ≤ a ≤ 1.2, 0.85 ≤ x ≤ 0.95, 0.04 ≤ y ≤ 0.15, 0 ≤ z ≤ 0.015, 0 ≤ w ≤ 0.15, 0 ≤ b < 0.05, x+y+z+w = 1, and M1 is at least one or more elements selected from the group consisting of Mn, Fe, Ti, Si, Nb, Zr, Mo, and Zn. M1 preferably is Mn.

The content rates of the elements constituting the lithium-containing transition metal composite oxide may be measured with an inductively coupled plasma atomic emission spectrometer (ICP-AES), an electron probe micro analyzer (EPMA), an energy dispersive X-ray analyzer (EDX), and the like.

The lithium-containing transition metal composite oxide is of, for example, secondary particles each formed by aggregation of a plurality of primary particles. A volume-based median diameter (D50) of the composite oxide is not particularly limited, and an example thereof is greater than or equal to 3 µm and less than or equal to 30 µm, and preferably greater than or equal to 5 µm and less than or equal to 25 µm. When the composite oxide is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (the same applies to a case of the negative electrode active material) may be measured by using a laser diffraction-type particle size distribution measuring device (for example, MT3000II, manufactured by MicrotracBEL Corp.) with water as a dispersion medium.

An average particle diameter of the primary particles constituting the lithium-containing transition metal composite oxide is, for example, greater than or equal to 0.05 µm and less than or equal to 1 µm. The average particle diameter of the primary particles is calculated by averaging diameters of circumscribed circles in the primary particles extracted by analyzing a scanning electron microscope (SEM) image of a cross section of the secondary particles.

The sulfonate compound present on the particle surfaces of the lithium-containing transition metal composite oxide is the compound represented by the formula (I), as noted above.

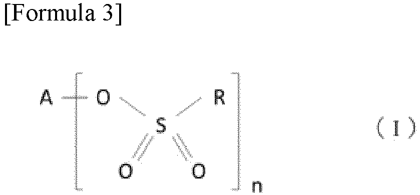

In the formula, A is a group I element or a group II element, R is a hydrocarbon group, and n is 1 or 2. A preferably is a group I element. Among these, Li or Na is more preferable, and Li is particularly preferable.

In the formula (I), R preferably is an alkyl group. The number of carbon atoms in the alkyl group is preferably less than or equal to 5, and more preferably less than or equal to 3. From the viewpoints of reduction in the reaction resistance and the like, a preferable example of R is an alkyl group having less than or equal to 3 carbon atoms, and specifically preferably a methyl group. In R, some of hydrogen bonded to carbon may be replaced with fluorine. In the formula (I), n preferably is 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate are preferable, and lithium methanesulfonate is particularly preferable.

The sulfonate compound is uniformly present on the entire particle surfaces of the lithium-containing transition metal composite oxide, for example. The presence of the sulfonate compound on the particle surfaces of the lithium-containing transition metal composite oxide may be confirmed by Fourier transform infrared spectrometry (FT-IR). In an infrared absorption spectrum obtained by FT-IR, the positive electrode active material including lithium methanesulfonate has absorption peaks near 1238 cm⁻¹, 1175 cm⁻¹, 1065 cm⁻¹, and 785 cm⁻¹, for example. The peaks near 1238 cm⁻¹, 1175 cm⁻¹, and 1065 cm⁻¹ are peaks attributed to SO stretching vibration derived from lithium methanesulfonate. The peak near 785 cm⁻¹ is a peak attributed to CS stretching vibration derived from lithium methanesulfonate.

Also, in the positive electrode active material including a sulfonate compound other than lithium methanesulfonate, the presence of the sulfonate compound may be confirmed from absorption peaks of the infrared absorption spectrum derived from the sulfonate compound. The presence of the sulfonate compound on the particle surfaces of the lithium-containing transition metal composite oxide may also be confirmed by ICP, atomic absorption spectrometry, X-ray photoelectron spectrometry (XPS), synchrotron XRD measurement, TOF-SIMS, or the like.

The positive electrode active material, which is an example of an embodiment, may be manufactured by the following method. The manufacturing method described here is an example, and the method for manufacturing the positive electrode active material is not limited to this method.

First, a metal oxide containing a metal element such as Ni, Al, Co, and Mn is synthesized. Then, this metal oxide and a lithium compound are mixed and calcined to obtain the lithium-containing transition metal composite oxide. The metal oxide may be synthesized by, for example, while stirring a solution of metal salts including Ni, Al, Co, and Mn, adding a solution of an alkali such as sodium hydroxide dropwise to adjust a pH on the alkaline side (for example, greater than or equal to 8.5 and less than or equal to 12.5) to precipitate (coprecipitate) a composite hydroxide including the metal elements such as Ni, Al, Co, and Mn, and thermally treating this composite hydroxide. The thermal treatment temperature is not particularly limited, and may be greater than or equal to 300°C and less than or equal to 600°C as an example.

Examples of the lithium compound include Li₂CO₃, LiOH, Li₂O₂, Li₂O, LiNO₃, LiNO₂, Li₂SO₄, LiOH·H₂O, LiH, and LiF. The metal oxide and the lithium compound are mixed so that a mole ratio between the metal elements in the metal oxide and Li in the lithium compound is, for example, greater than or equal to 1:0.98 and less than or equal to 1:1.1. When the metal oxide and the lithium compound are mixed, another metal raw material may be added as necessary.

The mixture of the metal oxide and the lithium compound is calcined under an oxygen atmosphere, for example. The mixture may be calcined via a plurality of temperature-raising processes. The calcining step includes, for example: a first temperature-raising step of raising a temperature at a temperature-raising rate of greater than or equal to 1.0 °C/min and less than or equal to 5.5 °C/min to greater than or equal to 450°C and less than or equal to 680°C; and a second temperature-raising step of raising a temperature at a temperature-raising rate of greater than or equal to 0.1 °C/min and less than or equal to 3.5 °C/min to greater than 680°C. The highest reaching temperature in the calcining step may be set at greater than or equal to 700°C and less than or equal to 850°C, and this temperature may be held for greater than or equal to 1 hour and less than or equal to 10 hours.

Then, the calcined product (lithium-containing transition metal composite oxide) is washed with water and dehydrated to obtain a cake-like composition. This washing step removes the remained alkali component. The washing with water and the dehydration may be performed by conventionally known methods. Thereafter, the cake-like composition is dried to obtain a powdery composition. The drying step may be performed under a vacuum atmosphere. An example of the drying conditions is at a temperature of greater than or equal to 150°C and less than or equal to 400°C for greater than or equal to 0.5 hours and less than or equal to 15 hours.

The sulfonate compound is added into the cake-like composition obtained in the washing step or the powdery composition obtained in the drying step, for example. In this case, a sulfonic acid solution may be added instead of the sulfonate compound or together with the sulfonate compound. This yields the positive electrode active material having the sulfonate compound adhering to the particle surfaces of the lithium-containing transition metal composite oxide. The sulfonate compound may be added as an aqueous dispersion. The sulfonic acid solution is preferably an aqueous solution of a sulfonic acid. A concentration of the sulfonic acid in the sulfonic acid solution is, for example, greater than or equal to 0.5 mass% and less than or equal to 40 mass%.

Since the lithium compound remains in the cake-like composition at a certain degree, adding the sulfonic acid solution into the cake-like composition allows Li dissolved in water in the cake to react with the sulfonic acid to obtain the lithium sulfonate.

### [Negative Electrode]

The negative electrode 12 has a negative electrode core 40 and a negative electrode mixture layer 41 formed on a surface of the negative electrode core 40. The negative electrode mixture layer 41 is preferably provided on both surfaces of the negative electrode core 40. A thickness of the negative electrode core 40 is preferably greater than or equal to 5 µm and less than or equal to 12 µm, and more preferably greater than or equal to 7 µm and less than or equal to 10 µm. This case increases the effect of improving the winding properties of the electrode plate in producing the electrode assembly. The thickness of the negative electrode mixture layer 41 is preferably, for example, greater than or equal to 50 µm and less than or equal to 150 µm on one side of the negative electrode core 40. The negative electrode 12 may be produced by, for example, applying a negative electrode mixture slurry including the negative electrode active material and the binder on the surface of the negative electrode core 40, and drying and subsequently compressing the coating film to form the negative electrode mixture layer 41 on both the surfaces of the negative electrode core 40.

For the negative electrode core 40, a foil of a metal stable within a potential range of the negative electrode, a film in which such a metal is disposed on a surface layer thereof, and the like may be used, and copper or a copper alloy is preferably used. The negative electrode core 40 made of copper or a copper alloy is stable within a potential range of the negative electrode 12. The case of using copper or a copper alloy easily regulates the 1%-proof stress of the negative electrode core 40 within the target range. The copper alloy mainly contains copper, and a content rate of copper is preferably greater than or equal to 90 mol% relative to a total number of moles of elements constituting the alloy.

The 1%-proof stress of the negative electrode core 40 is less than or equal to 300 MPa. Setting the 1%-proof stress of the negative electrode core 40 to be less than or equal to 300 MPa may improve the winding properties of the electrode assembly 14 to inhibit increase in the winding core diameter with decrease in the percentage of elongation at break of the positive electrode 11. In other words, if the 1%-proof stress of the negative electrode core 40 is greater than 300 MPa, the winding properties of the electrode plate in producing the electrode assembly considerably deteriorate to increase the winding core diameter. From the viewpoint of more improving the winding properties, the 1%-proof stress of the negative electrode core 40 is more preferably less than or equal to 250 MPa.

The 1%-proof stress of the negative electrode core 40 may be any of less than or equal to 300 MPa from the viewpoint of increasing capacity, but an excessively low 1%-proof stress of the negative electrode core 40 may deteriorate process stability of the battery assembly. Thus, the 1%-proof stress of the negative electrode core 40 is preferably greater than or equal to 100 MPa, and more preferably greater than or equal to 150 MPa. Therefore, a preferable range of the 1%-proof stress of the negative electrode core 40 is greater than or equal to 100 MPa and less than or equal to 300 MPa, and more preferably greater than or equal to 150 MPa and less than or equal to 250 MPa. The 1%-proof stress of the negative electrode core 40 within this range may achieve the non-aqueous electrolyte secondary battery 10 having high capacity.

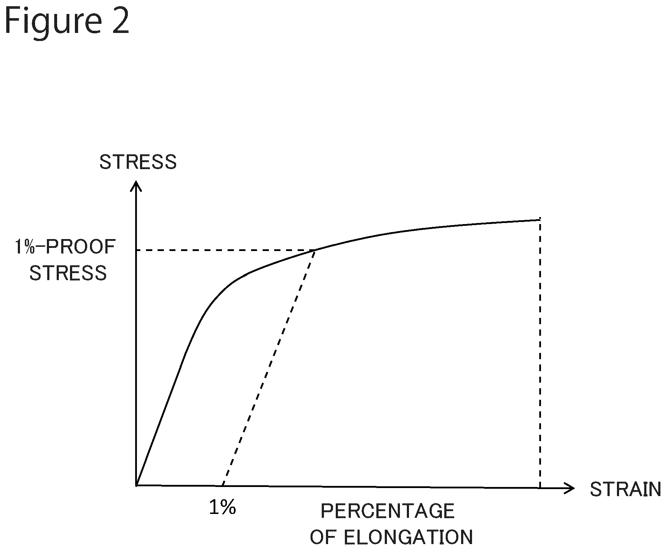

The 1%-proof stress of the negative electrode core 40 refers to proof stress (1%) measured by "Metallic materials-Tensile testing-Method of test at room temperature" of JIS Z 2241. FIG. 2 is a schematic view indicating a relationship between strain and stress in the tensile test on the negative electrode core 40. The 1%-proof stress is a value of stress with strain of 1%. The 1%-proof stress of the negative electrode core 40 may be regulated with, for example, the thickness of the negative electrode core 40 and the crystal grain size of the material of the negative electrode core 40. Reducing the crystal grain size of the material of the negative electrode core 40 increases the 1%-proof stress of the negative electrode core 40.

The percentage of elongation at break of the negative electrode core 40 is preferably greater than or equal to 10%, and more preferably greater than or equal to 12% from the viewpoint of the winding properties. An excessively large percentage of elongation at break of the negative electrode core 40 may deteriorate process stability of the battery assembly, and thus the percentage of elongation at break of the negative electrode core 40 is preferably less than or equal to 20%, and more preferably less than or equal to 18%. Therefore, an example of a preferable percentage of elongation at break of the negative electrode core is greater than or equal to 10% and less than or equal to 20%, and more preferably greater than or equal to 12% and less than or equal to 18%.

For the binder included in the negative electrode mixture layer 41, a fluororesin, PAN, a polyimide, an acrylic resin, a polyolefin, or the like may be used as in the case of the positive electrode 11, but styrene-butadiene rubber (SBR) is preferably used. The negative electrode mixture layer 41 preferably includes CMC or a salt thereof, polyacrylic acid (PAA) or a salt thereof, polyvinyl alcohol (PVA), or the like. Among these, SBR; and CMC or a salt thereof, or PAA or a salt thereof are preferably used in combination. A content rate of the binder is, for example, greater than or equal to 0.1 mass% and less than or equal to 5 mass% relative to the mass of the negative electrode mixture layer 41. The negative electrode mixture layer 41 may include a conductive agent such as CNT.

The negative electrode mixture layer 41 preferably includes a carbon material and a silicon-containing material as the negative electrode active material. Use in combination of the carbon material and the silicon-containing material easily achieves both high capacity and excellent cycle characteristics. The negative electrode mixture layer 41 includes substantially only the carbon material and the silicon-containing material as the negative electrode active material, for example. A content rate of the carbon material is preferably higher than a content rate of the silicon-containing material.

The content rate of the silicon-containing material is preferably less than or equal to 20 mass%, and more preferably less than or equal to 15 mass% based on the total mass of the negative electrode active material from the viewpoint of improvement of the cycle characteristics. In the non-aqueous electrolyte secondary battery in which the sulfonate compound is added into the positive electrode 11, a case where the silicon-containing material is absolutely absent tends to deteriorate the cycle characteristics. The content rate of the silicon-containing material is preferably greater than or equal to 5 mass% from the viewpoint of increasing capacity. Thus, an example of a preferable range of the content rate of the silicon-containing material is greater than or equal to 5 mass% and less than or equal to 20 mass%, and more preferably greater than or equal to 5 mass% and less than or equal to 15 mass% based on the total mass of the negative electrode active material.

The carbon material that functions as the negative electrode active material is, for example, at least one selected from the group consisting of natural graphite, artificial graphite, soft carbon, and hard carbon. Among these, artificial graphite such as massive artificial graphite (MAG) or graphitized mesophase-carbon microbead (MCMB); natural graphite such as flake graphite, massive graphite, or amorphous graphite; or a mixture thereof is preferably used. A volume-based D50 of the carbon material is, for example, greater than or equal to 1 µm and less than or equal to 30 µm, and preferably greater than or equal to 5 µm and less than or equal to 25 µm.

The soft carbon and the hard carbon are classified as amorphous carbon in which a graphite crystal structure is not developed. More specifically, the amorphous carbon means a carbon content with a d(002) spacing by X-ray diffraction of greater than or equal to 0.342 nm. The soft carbon is also called as easily graphitized carbon, which is carbon easily graphitized by a high-temperature treatment compared with the hard carbon. The hard carbon is also called as hardly graphitized carbon. For the configuration of the present invention, the soft carbon and the hard carbon are not necessarily distinguished clearly. As the negative electrode active material, graphite; and the amorphous carbon of at least one of the soft carbon and the hard carbon may be used in combination.

The silicon-containing material may be any material as long as the material contains Si, and an example thereof includes a silicon alloy, a silicon compound, and a composite material containing Si. Among these, the composite material containing Si is preferable. D50 of the composite oxide is typically smaller than D50 of the graphite. The volume-based D50 of the composite material is, for example, greater than or equal to 1 µm and less than or equal to 15 µm. The silicon-containing material may be used singly, or may be used in combination of two or more thereof.

The preferable silicon-containing material (composite material) is of composite particles including an ion-conductive phase, Si phases dispersed in the ion-conductive phase, and a conductive layer covering a surface of the ion-conductive phase. The ion-conductive phase is, for example, at least one selected from the group consisting of a silicate phase, a carbon phase, a silicide phase, and a silicon oxide phase. The ion-conductive phase is a continuous phase constituted by aggregation of particles finer than the Si phase. The silicide phase is a phase of a compound composed of Si and an element more electrically positive than Si, and an example thereof includes NiSi, Mg₂Si, and TiSi₂. The Si phase is formed by Si dispersed as fine particles. The conductive layer is constituted with a material having higher conductivity than the ion conductive layer, and forms a good conductive path in the negative electrode mixture layer 41.

An example of the preferable composite material containing Si is of composite particles that have a sea-island structure in which Si is substantially uniformly dispersed as particles in an amorphous silicon oxide phase, and that is represented entirely by the general formula SiOₓ (0 < x ≤ 2). The main component of silicon oxide may be silicon dioxide. A content ratio (x) of oxygen to Si is, for example, 0.5 ≤ x < 2.0, and preferably 0.8 ≤ x ≤ 1.5.

Another example of a preferable composite material containing Si is of composite particles having a sea-island structure in which Si is substantially uniformly dispersed as particles in the ion-conductive phase. The ion-conductive phase includes, for example, at least one selected from the group consisting of an alkali metal element and a group II element. The silicate phase may further include an element M other than the alkali metal element and the group II element. The element M may be at least one selected from the group consisting of B, Al, Zr, Nb, Ta, V, Y, Ti, P, Bi, Zn, Sn, Pb, Sb, Co, Er, F, W, and a lanthanoid.

A preferable ion-conductive phase is a lithium silicate phase containing Li. The lithium silicate phase is, for example, a phase of a composite oxide represented by the general formula Li_{2z}SiO_{(2+z)} (0 < z < 2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The amorphous carbon phase is constituted with, for example, a carbon material having greater than 0.34 nm of an average spacing of a (002) face measured by X-ray diffraction. The amorphous carbon phase is constituted with, for example, particles of amorphous carbon. The composite material including the carbon phase may have a conductive layer different from the carbon phase, or may not have the conductive layer.

The conductive layer formed on the particle surfaces of the composite material is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, or greater than or equal to 5 nm and less than or equal to 100 nm with considering achievement of conductivity and diffusability of Li ions toward particle inside. The thickness of the conductive layer may be measured by observing a cross section of the composite material using a SEM or a transmission electron microscope (TEM).

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On an interface between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Production of Positive Electrode Active Material]

A composite hydroxide represented by [Ni_{0.90}Al_{0.05}Mn_{0.05}](OH)₂ obtained by a coprecipitation method was calcined at 500°C for 8 hours to obtain a metal oxide (Ni_{0.90}Al_{0.05}Mn_{0.05}O₂). Then, LiOH and the metal oxide were mixed so that a mole ratio between Li and a total amount of Ni, Al, and Mn was 1.03:1 to obtain a mixture. This mixture was calcined under an oxygen flow with an oxygen concentration of 95% (a flow rate of 2 mL/min per 10 cm³ and 5 L/min per kilogram of the mixture) at a temperature-raising rate of 2.0 °C/min from room temperature to 650°C, and then calcined at a temperature-raising rate of 0.5 °C/min from 650°C to 780°C to obtain a lithium-containing composite oxide (synthesizing step). Into this lithium-containing composite oxide, water was added so that a slurry concentration was 1500 g/L, and the slurry was stirred for 15 minutes and filtered to obtain a cake-like composition (washing step). Into this cake-like composition, powdery lithium methanesulfonate was added (adding step). An amount of the added lithium methanesulfonate was 0.1 mass% relative to the total mass of the lithium-containing composite oxide. After the adding step, a drying step was performed under a vacuum atmosphere at 180°C for 2 hours to obtain a positive electrode active material of Example 1. By Fourier transform infrared spectrometry (FT-IR), the presence of lithium methanesulfonate on the surface of the positive electrode active material was confirmed.

### [Production of Positive Electrode]

The positive electrode active material, acetylene black, and polyvinylidene fluoride were mixed at a mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating film was dried and compressed, and then the positive electrode core was cut to a predetermined electrode size to produce a positive electrode in which a positive electrode mixture layer was formed on both surfaces of the positive electrode core. At a part of the positive electrode, an exposed portion where the surface of the positive electrode core was exposed was provided.

### [Production of Negative Electrode]

Artificial graphite and SiOₓ (0 < x ≤ 2) were mixed at a mass ratio of 94:6, and this mixture was used as a negative electrode active material. This negative electrode active material, carboxymethylcellulose (CMC), and a dispersion of styrene-butadiene rubber (SBR) were mixed at a solid-content mass ratio of 98:1:1, and water was used as a dispersion medium to prepare a negative electrode mixture slurry. This negative electrode mixture slurry was applied on both surfaces of a negative electrode core composed of copper foil having a thickness of 8 µm, the coating film was dried, then the coating film was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Selection of Winding Core Diameter of Test Cell (Wound Non-Aqueous Electrolyte Secondary Battery)]

The size of the possible winding core diameter of the test cell herein is determined by the following method.
(1) A plurality of products are produced in which an aluminum lead is attached to the exposed portion of the positive electrode and a nickel lead is attached to the exposed portion of the negative electrode. The positive electrode and the negative electrode are spirally wound via a separator made of a polyolefin by using a winding core having varied winding core diameters of from 2.8 mm to 4.5 mm by 0.1 mm.
(2) Presence or absence of abnormal portions such as breakage and folding in the wound electrode assembly is visually observed. Among the winding cores without abnormality, a smallest winding core diameter is specified as the possible winding core diameter.

### [Production of Test Cell]

An aluminum lead was attached to the exposed portion of the positive electrode and a nickel lead was attached to the exposed portion of the negative electrode. The positive electrode and the negative electrode were spirally wound via a separator made of a polyolefin by using a winding core to produce a wound electrode assembly. The used winding core diameter was the possible winding core diameter determined by the above selection, and the diameter was 3.3 mm. This electrode assembly was housed in an exterior housing can constituted with an aluminum laminate sheet, the non-aqueous electrolyte liquid was injected thereinto, and then an opening of the exterior housing can was sealed to obtain a test cell.

### [Evaluation of Initial Discharge Capacity]

Under an environment temperature at 25°C, the test cell was charged at a constant current of 0.2 It until 4.2 V, and then charged at a constant voltage of 4.2 V until 0.02 It. Thereafter, the test cell was discharged at a constant current of 0.2 It until 2.5 V, and a discharge capacity at this time was evaluated.

### [Evaluation of 1%-Proof Stress and Percentage of Elongation at Break of Negative Electrode Core]

The test cell after the discharge capacity evaluation was disassembled, and the negative electrode was taken out. In accordance with "Metallic materials-Tensile testing-Method of test at room temperature" of JIS Z 2241, 1%-proof stress (off-set method) and elongation at break of the negative electrode core that was punched into a dumbbell shape were measured by using Auto Graph (AG-IS), manufactured by SHIMADZU CORPORATION. Then, a percentage of elongation at break from a length of a side in a width direction of the negative electrode before assembled in the test cell was calculated. The negative electrode core of Example 1 had a 1%-proof stress of 200 MPa, and a percentage of elongation at break of 15%.

### <Example 2>

A test cell was produced and evaluated in the same manner as in Example 1 except that, in the adding step for the positive electrode active material, the amount of the added lithium methanesulfonate relative to the total mass of the lithium-containing composite oxide was 0.3 mass%.

### <Example 3>

A test cell was produced and evaluated in the same manner as in Example 1 except that, in the adding step for the positive electrode active material, the amount of the added lithium methanesulfonate relative to the total mass of the lithium-containing composite oxide was 0.5 mass%.

### <Example 4>

A test cell was produced and evaluated in the same manner as in Example 1 except that, in the adding step for the positive electrode active material, the amount of the added lithium methanesulfonate relative to the total mass of the lithium-containing composite oxide was 1.0 mass%.

### <Example 5>

A test cell was produced and evaluated in the same manner as in Example 1 except that: in the adding step for the positive electrode active material, the amount of the added lithium methanesulfonate relative to the total mass of the lithium-containing composite oxide was 0.5 mass%; and in the production of the negative electrode, the thickness of the negative electrode core was 5 µm, and the winding core used in producing the electrode assembly was changed. The usable winding core diameter based on the above selection was 3.6 mm.

### <Example 6>

A test cell was produced and evaluated in the same manner as in Example 1 except that: in the adding step for the positive electrode active material, the amount of the added lithium methanesulfonate relative to the total mass of the lithium-containing composite oxide was 0.5 mass%; and in the production of the negative electrode, the thickness of the negative electrode core was 12 µm, and the winding core used in producing the electrode assembly was changed. The usable winding core diameter based on the above selection was 3.1 mm.

### <Example 7>

A test cell was produced and evaluated in the same manner as in Example 1 except that: in the adding step for the positive electrode active material, the amount of the added lithium methanesulfonate relative to the total mass of the lithium-containing composite oxide was 0.5 mass%; and in the production of the negative electrode, the strength of the negative electrode core was changed, and the winding core used in producing the electrode assembly was changed. The usable winding core diameter based on the above selection was 3.7 mm.

### <Example 8>

A test cell was produced and evaluated in the same manner as in Example 1 except that, in the adding step for the positive electrode active material, sodium methanesulfonate was added as the sulfonate compound, and the amount thereof was 0.5 mass% relative to the total mass of the lithium-containing composite oxide.

### <Example 9>

A test cell was produced and evaluated in the same manner as in Example 1 except that, in the adding step for the positive electrode active material, lithium ethanesulfonate was added as the sulfonate compound, and the amount thereof was 0.5 mass% relative to the total mass of the lithium-containing composite oxide.

### <Example 10>

A test cell was produced and evaluated in the same manner as in Example 1 except that: in the adding step for the positive electrode active material, the amount of the added lithium methanesulfonate relative to the total mass of the lithium-containing composite oxide was 0.5 mass%; and in the production of the negative electrode, the artificial graphite and SiOₓ (0 < x ≤ 2) were mixed at a mass ratio of 85:15.

### <Comparative Example 1>

A test cell was produced and evaluated in the same manner as in Example 1 except that: in the adding step for the positive electrode active material, the sulfonate compound was not added; and the winding core used in producing the electrode assembly was changed. The usable winding core diameter based on the above selection was 3.0 mm.

### <Comparative Example 2>

A test cell was produced and evaluated in the same manner as in Example 1 except that, in the adding step for the positive electrode active material, lithium succinate was added, and the amount thereof was 0.5 mass% relative to the total mass of the lithium-containing composite oxide.

### <Comparative Example 3>

A test cell was produced and evaluated in the same manner as in Example 1 except that, in the adding step for the positive electrode active material, lithium oxalate was added, and the amount thereof was 0.5 mass% relative to the total mass of the lithium-containing composite oxide.

### <Comparative Example 4>

A test cell was produced and evaluated in the same manner as in Example 1 except that: in the adding step for the positive electrode active material, the sulfonate compound was not added; and in the production of the negative electrode, the strength of the negative electrode core was changed, and the winding core used in producing the electrode assembly was changed. The usable winding core diameter based on the above selection was 4.0 mm.

### <Comparative Example 5>

A test cell was produced and evaluated in the same manner as in Example 1 except that: in the adding step for the positive electrode active material, the amount of the added lithium methanesulfonate relative to the total mass of the lithium-containing composite oxide was 0.5 mass%; and in the production of the negative electrode, the strength of the negative electrode core was changed, and the winding core used in producing the electrode assembly was changed. The usable winding core diameter based on the above selection was 4.3 mm.

### <Comparative Example 6>

A test cell was produced and evaluated in the same manner as in Example 1 except that: in the adding step for the positive electrode active material, the sulfonate compound was not added; and in the production of the negative electrode, the artificial graphite and SiOₓ (0 < x ≤ 2) were mixed at a mass ratio of 85:15, and the winding core used in producing the electrode assembly was changed. The usable winding core diameter based on the above selection was 3.0 mm.

### <Comparative Example 7>

A test cell was produced and evaluated in the same manner as in Example 1 except that: in the adding step for the positive electrode active material, the amount of the added lithium methanesulfonate relative to the total mass of the lithium-containing composite oxide was 0.5 mass%; and in the production of the negative electrode, the artificial graphite and SiOₓ (0 < x ≤ 2) were mixed at a mass ratio of 85:15, the strength of the negative electrode core was changed, and the winding core used in producing the electrode assembly was changed. The usable winding core diameter based on the above selection was 4.3 mm.

Table 1 and Table 2 separately show the initial discharge capacity of Examples and Comparative Examples. Table 1 and Table 2 also show the characteristics of the negative electrode core (the thickness, the 1%-proof stress, and the percentage of elongation at break) and the possible winding core diameter. The initial discharge capacity in Table 1 is values relative to the initial discharge capacity of the test cell of Comparative Example 1 being 100. The initial discharge capacity in Table 2 is values relative to the initial discharge capacity of the test cell of Comparative Example 6 being 100. A larger value thereof means more excellent initial discharge capacity.

**[Table 1]**

| | Positive electrode | | Negative electrode | | | | Battery evaluation | |
|---|---|---|---|---|---|---|---|---|
| | Positive electrode active material | | Negative electrode active material | Negative electrode core | | | | |
| | Additive compound | Addition rate [mass%] | Silicon-containing material content rate [mass%] | Thickness [µm] | 1%-Proof stress [MPa] | Percentage of elongation at break [%] | Possible winding core diameter [mm] | Initial discharge capacity (relative value) |
| Example 1 | Li methanesulfonate | 0.1 | 6 | 8 | 200 | 15 | 3.3 | 101.3 |
| Example 2 | Li methanesulfonate | 0.3 | 6 | 8 | 200 | 15 | 3.3 | 101.6 |
| Example 3 | Li methanesulfonate | 0.5 | 6 | 8 | 200 | 15 | 3.3 | 102.0 |
| Example 4 | Li methanesulfonate | 1.0 | 6 | 8 | 200 | 15 | 3.3 | 100.8 |
| Example 5 | Li methanesulfonate | 0.5 | 6 | *5* | 220 | 16 | 3.6 | 102.2 |
| Example 6 | Li methanesulfonate | 0.5 | 6 | 12 | 190 | 12 | 3.1 | 100.4 |
| Example 7 | Li methanesulfonate | 0.5 | 6 | 8 | 280 | 10 | 3.7 | 100.8 |
| Example 8 | Na methanesulfonate | 0.5 | 6 | 8 | 200 | 15 | 3.3 | 100.5 |
| Example 9 | Li ethanesulfonate | 0.5 | 6 | 8 | 200 | 15 | 3.3 | 101.3 |
| Comparative Example 1 | - | - | 6 | 8 | 200 | 15 | 3.0 | 100.0 |
| Comparative Example 2 | Li succinate | 0.5 | 6 | 8 | 200 | 15 | 3.3 | 99.6 |
| Comparative Example 3 | Li oxalate | 0.5 | 6 | 8 | 200 | 15 | 3.3 | 99.2 |
| Comparative Example 4 | - | - | 6 | 8 | 350 | 8 | 4.0 | 98.6 |
| Comparative Example 5 | Li methanesulfonate | 0.5 | 6 | 8 | 350 | 8 | 4.3 | 99.8 |

**[Table 2]**

| | Positive electrode | | Negative electrode | | | | Battery evaluation | |
|---|---|---|---|---|---|---|---|---|
| | Positive electrode active material | | Negative electrode active material | Negative electrode core | | | | |
| | Additive compound | Addition rate [mass%] | Silicon-containing material content rate [mass%] | Thickness [µm] | 1%-Proof stress [MPa] | Percentage of elongation at break [%] | Possible winding core diameter [mm] | Initial discharge capacity (relative value) |
| Example 10 | Li methanesulfonate | 0.5 | 15 | 8 | 200 | 15 | 3.3 | 100.4 |
| Comparative Example 6 | - | - | 15 | 8 | 200 | 15 | 3.0 | 100.0 |
| Comparative Example 7 | Li methanesulfonate | 0.5 | 15 | 8 | 350 | 8 | 4.3 | 98.3 |

As shown in Table 1, all the test cells of Examples 1 to 9, which applied the sulfonate compound for the positive electrode and used the negative electrode core having a 1%-proof stress of less than or equal to 300 MPa for the negative electrode, improved the initial discharge capacity compared with the test cells of Comparative Examples 1 to 5. The test cell of Comparative Example 1, which did not apply the sulfonate compound for the positive electrode and used the negative electrode core having a 1%-proof stress of 200 MPa for the negative electrode, exhibited poor initial discharge capacity compared with the test cells of Examples 1 to 4. The test cells of Comparative Examples 5 and 7, which applied the sulfonate compound for the positive electrode and used the negative electrode core having a 1%-proof stress of 350 MPa for the negative electrode, exhibited poor initial discharge capacity compared with the test cells of Examples 3 and 10.

As shown in Table 2, the initial discharge capacity was improved by applying the sulfonate compound for the positive electrode and using the negative electrode core having a 1%-proof stress of less than or equal to 300 MPa for the negative electrode even when the negative electrode active material having a silicon content rate of 15 mass% was used for the negative electrode.

From the above results, when the negative electrode core having a 1%-proof stress of less than or equal to 300 MPa is used for the negative electrode, the initial discharge capacity is remarkably improved by applying the sulfonate compound for the positive electrode. Meanwhile, when the negative electrode core having a 1%-proof stress of greater than 300 MPa is used for the negative electrode, it is difficult to improve the initial discharge capacity even when the sulfonate compound is applied for the positive electrode.

The present disclosure will be further described with the following embodiments.

Constitution 1: A wound non-aqueous electrolyte secondary battery, comprising: a positive electrode; a negative electrode; and a non-aqueous electrolyte, wherein the positive electrode includes a lithium-containing transition metal composite oxide and a sulfonate compound present on particle surfaces of the composite oxide, the sulfonate compound is a compound represented by the above formula (I), the negative electrode has a negative electrode core and a negative electrode mixture layer formed on a surface of the negative electrode core, and a 1%-proof stress of the negative electrode core is less than or equal to 300 MPa.

Constitution 2: The non-aqueous electrolyte secondary battery according to Constitution 1, wherein the sulfonate compound is present at an amount of greater than or equal to 0.1 mass% and less than or equal to 1.0 mass% relative to a mass of the lithium-containing transition metal composite oxide.

Constitution 3: The non-aqueous electrolyte secondary battery according to Constitution 1 or 2, wherein A in the formula (I) is Li or Na.

Constitution 4: The non-aqueous electrolyte secondary battery according to any one of Constitutions 1 to 3, wherein R in the formula (I) is an alkyl group having less than or equal to 3 carbon atoms.

Constitution 5: The non-aqueous electrolyte secondary battery according to any one of Constitutions 1 to 4, wherein the lithium-containing transition metal composite oxide has a layered rock-salt structure.

Constitution 6: The non-aqueous electrolyte secondary battery according to any one of Constitutions 1 to 5, wherein a percentage of elongation at break of the negative electrode core is greater than or equal to 10% and less than or equal to 20%.

Constitution 7: The non-aqueous electrolyte secondary battery according to any one of Constitutions 1 to 5, wherein the negative electrode core is copper, and a thickness of the negative electrode core is greater than or equal to 5 µm and less than or equal to 12 µm.

Constitution 8: The non-aqueous electrolyte secondary battery according to any one of Constitutions 1 to 5, wherein the negative electrode mixture layer includes a carbon material and a silicon-containing material as a negative electrode active material.

Constitution 9: The non-aqueous electrolyte secondary battery according to Constitution 8, wherein the carbon material is at least one selected from the group consisting of natural graphite, artificial graphite, soft carbon, and hard carbon.

Constitution 10: The non-aqueous electrolyte secondary battery according to Constitution 8 or 9, wherein a content rate of the silicon-containing material is greater than or equal to 5 mass% and less than or equal to 20 mass% based on a total mass of the negative electrode active material.

Constitution 11: The non-aqueous electrolyte secondary battery according to any one of Constitutions 8 to 10, wherein the silicon-containing material includes an ion-conductive phase, Si phases dispersed in the ion-conductive phase, and a conductive layer covering a surface of the ion-conductive phase.

Constitution 12: The non-aqueous electrolyte secondary battery according to Constitution 11, wherein the ion-conductive phase is at least one selected from the group consisting of a silicate phase, a carbon phase, a silicide phase, and a silicon oxide phase.

Constitution 13: The non-aqueous electrolyte secondary battery according to Constitution 11 or 12, wherein the ion-conductive phase includes at least one selected from the group consisting of an alkali metal element and a group II element.

Constitution 14: The non-aqueous electrolyte secondary battery according to Constitution 13, wherein the ion-conductive phase further includes an element M, and the element M is at least one selected from the group consisting of B, Al, Zr, Nb, Ta, V, La, Y, Ti, P, Bi, Zn, Sn, Pb, Sb, Co, Er, F, and W.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer.

## Claims

1. A wound non-aqueous electrolyte secondary battery, comprising:
a positive electrode;
a negative electrode; and
a non-aqueous electrolyte, wherein
the positive electrode includes a lithium-containing transition metal composite oxide and a sulfonate compound present on particle surfaces of the composite oxide,
the sulfonate compound is a compound represented by a formula (I), wherein A is a group I element or a group II element, R is a hydrocarbon group, and n is 1 or 2,
the negative electrode has a negative electrode core and a negative electrode mixture layer formed on a surface of the negative electrode core, and
a 1%-proof stress of the negative electrode core is less than or equal to 300 MPa.

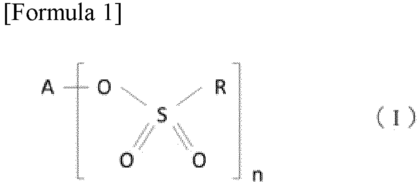

2. The non-aqueous electrolyte secondary battery according to claim 1, wherein the sulfonate compound is present at an amount of greater than or equal to 0.1 mass% and less than or equal to 1.0 mass% relative to a mass of the lithium-containing transition metal composite oxide.

3. The non-aqueous electrolyte secondary battery according to claim 1 or 2, wherein A in the formula (I) is Li or Na.

4. The non-aqueous electrolyte secondary battery according to claim 1 or 2, wherein R in the formula (I) is an alkyl group having less than or equal to 3 carbon atoms.

5. The non-aqueous electrolyte secondary battery according to claim 1 or 2, wherein the lithium-containing transition metal composite oxide has a layered rock-salt structure.

6. The non-aqueous electrolyte secondary battery according to claim 1 or 2, wherein a percentage of elongation at break of the negative electrode core is greater than or equal to 10% and less than or equal to 20%.

7. The non-aqueous electrolyte secondary battery according to claim 1 or 2, wherein the negative electrode core is copper, and a thickness of the negative electrode core is greater than or equal to 5 µm and less than or equal to 12 µm.

8. The non-aqueous electrolyte secondary battery according to claim 1 or 2, wherein the negative electrode mixture layer includes a carbon material and a silicon-containing material as a negative electrode active material.

9. The non-aqueous electrolyte secondary battery according to claim 8, wherein the carbon material is at least one selected from the group consisting of natural graphite, artificial graphite, soft carbon, and hard carbon.

10. The non-aqueous electrolyte secondary battery according to claim 8, wherein a content rate of the silicon-containing material is greater than or equal to 5 mass% and less than or equal to 20 mass% based on a total mass of the negative electrode active material.

11. The non-aqueous electrolyte secondary battery according to claim 8, wherein the silicon-containing material includes an ion-conductive phase, Si phases dispersed in the ion-conductive phase, and a conductive layer covering a surface of the ion-conductive phase.

12. The non-aqueous electrolyte secondary battery according to claim 11, wherein the ion-conductive phase is at least one selected from the group consisting of a silicate phase, a carbon phase, a silicide phase, and a silicon oxide phase.

13. The non-aqueous electrolyte secondary battery according to claim 11, wherein the ion-conductive phase includes at least one selected from the group consisting of an alkali metal element and a group II element.

14. The non-aqueous electrolyte secondary battery according to claim 13, wherein the ion-conductive phase further includes an element M, and the element M is at least one selected from the group consisting of B, Al, Zr, Nb, Ta, V, La, Y, Ti, P, Bi, Zn, Sn, Pb, Sb, Co, Er, F, and W.
